# EUROPEAN PATENT APPLICATION

(11) **EP 3 379 238 A1**
(43) Date of publication of application: **26.09.2018**
(21) Application number: 17161802.8
(22) Date of filing: 20.03.2017
(51) Int. Cl.: G01N 25/00, G01K 1/02, G01K 13/12

(54) **DEVICE FOR DETECTING AND LOGGING A TEMPERATURE OF A FLUID WHILE PLACED IN THE FLUID**

(71) Applicant: F. Hoffmann-La Roche AG, 4070 Basel (CH); Roche Diagnostics GmbH, 68305 Mannheim (DE)
(72) Inventor: BURGHARDT, Geza, 8926 Uerzlikon (CH); SIBLER, Anthony, 8903 Birmensdorf (CH)
(74) Representative: Herzog, Fiesser & Partner Patentanwälte PartG mbB

(57) **Abstract**

A device (100) for detecting and logging a temperature of a fluid (102) while placed in the fluid (102) is disclosed. The device (100) comprises a microprocessor (104) having an integrated temperature sensor (106), wherein the temperature sensor (106) is configured to detect the temperature of the fluid (102), a power source (108) configured to power the microprocessor (104), and a communication interface (110) configured to be connected to an external read out device (112) for enabling a read out of temperature data. Further disclosed herein are a system (120) and use of the device (100) for detecting and logging a temperature of a fluid (102).

## Description

### Field of the invention

The present invention is in the field of handling of fluid samples and more particularly relates to a device for detecting and logging a temperature of a fluid while placed in the fluid, to a system comprising a read out device and such a device, and to an use of such a device for detecting and logging a temperature of a fluid while placed in the fluid.

### Related art

In in-vitro diagnostics assays, it is often important to know that a fluid subject of an assay undergoes appropriate test conditions. One important information is for example the temperature of the fluid.

In order to detect the temperature, different types of temperature loggers are known. However, these temperature loggers involve drawbacks. Standard temperature loggers using wired sensors cause perturbation of the temperature in the fluid. Some of the sensors are too big for in-process surveillance in medical analyzers. Some sensors use infrared light. However, infrared sensors are neither specific nor accurate enough as they principally measure the temperature at the surface of a liquid.

### Summary

Embodiments of the disclosed device, system and use aim to allow detecting and logging the temperature of a fluid while placed in the fluid in a reliable and simplified manner.

Disclosed herein are a device for detecting and logging a temperature of a fluid while placed in the fluid, a system comprising a read out device and such a device, a system comprising an instrument for handling a plurality of fluids and such a device, and an use of such a device for detecting and logging a temperature of a fluid while placed in the fluid.

Embodiments of the disclosed device for detecting and logging a temperature of a fluid while placed in the fluid, system comprising a read out device and such a device, system comprising an instrument for handling a plurality of fluids and such a device, and use of such a device for detecting and logging a temperature of a fluid while placed in the fluid have the features of the independent claims. Further embodiments, which might be realized in an isolated fashion or in any arbitrary combination are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, notwithstanding the fact that the respective feature or element may be present once or more than once.

Further, as used in the following, the terms "particularly", "more particularly", "specifically", "more specifically" or similar terms are used in conjunction with additional / alternative features, without restricting alternative possibilities. Thus, features introduced by these terms are additional / alternative features and are not intended to restrict the scope of the claims in any way. The invention may, as the skilled person will recognize, be performed by using alternative features. Similarly, features introduced by "in an embodiment of the invention" or similar expressions are intended to be additional / alternative features, without any restriction regarding alternative embodiments of the invention, without any restrictions regarding the scope of the invention and without any restriction regarding the possibility of combining the features introduced in such way with other additional / alternative or non-additional / alternative features of the invention.

The disclosed device for detecting and logging a temperature of a fluid while placed in the fluid comprises a microprocessor having an integrated temperature sensor. The temperature sensor is configured to detect the temperature of the fluid. The device further comprises a power source configured to power the microprocessor. The device further comprises a communication interface configured to be connected to an external read out device for enabling a read out of the temperature data.

The term "logging" as used in the art refers to the operation of recording measurements at set intervals over a period of time. In this case the measurements are temperature measurements and the device can be also called a temperature logger.

Thus, the device may be put in contact, such as direct contact, with the fluid. For example, the device may be completely or at least in part immersed in the fluid or at the surface thereof. Further, in order to detect the temperature of the fluid, the temperature sensor inherent to the microprocessor, which is normally used to detect the temperature of the microprocessor, is used which allows to miniaturize the device. Such a miniaturized device may be used in a broad range of applications such as verifying temperatures during the complete sample process of an instrument, checking the performance of incubators or during development, verification, quality control and the like. The device reduces the time to check an instrument temperature regulation. The device can measure the temperature even in very small fluid volumes.

The term "microprocessor" as used herein refers to a processor which incorporates the functions of a central processing unit (CPU) on a single integrated circuit (IC), or at most a few integrated circuits. A processor is an electronic circuit which performs operations on some external data source, usually memory or some other data stream. The microprocessor is a multipurpose, clock driven, register based, programmable electronic device which accepts digital or binary data as input, processes it according to instructions stored in its memory, and provides results as output. Microprocessors contain both combinational logic and sequential digital logic. Microprocessors operate on numbers and symbols represented in the binary numeral system. The integration of a whole CPU onto a single chip or on a few chips greatly reduced the cost of processing power, increasing efficiency.

The term "integrated temperature sensor" as used herein refers to the temperature sensor integrated with or inherent to the microprocessor. The reason for the provision of a microprocessor with an integrated temperature sensor is that such processors may not exceed the operation temperatures similar to semiconductors as such exceeding may cause malfunctions such as crashes or even destroy the chip in worst cases. In order to check the temperature, a temperature sensor is provided and integrated into the processor.

The term "power source" as used herein refers to any device configured to supply electric power or current to the microprocessor.

The term "communication interface" as used herein refers to an interface configured to send data over a communication channel or computer bus. The data may be sent one bit at a time, i.e. sequentially, or as a whole, i.e. in parallel, on a link with several parallel channels. An interface is a shared boundary across which two separate components of a computer based system exchange information. The exchange can be between software, computer hardware, peripheral devices, humans and combinations of these.

The term "read out device" as used herein refers to any device configure to take or retrieve data from the microprocessor.

The microprocessor may further comprise an integrated storage device configured to at least temporarily store temperature data detected by the temperature sensor. Thus, the temperature data may first be stored and then retrieved at an appropriate point of time. This can be particularly relevant when access to the temperature data is not possible in real time.

The device may further comprise a waterproof housing, wherein the microprocessor, the power source and the communication interface are arranged within the housing. Thus, the device may not only be formed in a compact manner but may also be completely immersed into the fluid which improves the quality of the temperature detection. Needless to say, the storage device may also be located within the housing.

The housing may be a three dimensional body, wherein each of the dimensions of the body is can be smaller than 5.0 mm, preferably smaller than 4.5 mm and more preferably smaller than 4.0 mm. Thus, the device may be designed rather or comparably small.

The temperature sensor may be configured to detect the temperature of the sample fluid at predetermined periods. Thus, the data volume and the energy consumption of the microprocessor may be reduced if the temperature data are not continuously created. This is particularly advantageous for temperature detection with fluid whose temperature does not vary rapidly.

The periods may be variable from 60s to 0.5s and preferably 30s to 1.0s. Thus, the frequency of temperature detection may be adjusted to the respective application. For example, the periods may be continuously variable or may be variable at predetermined steps. Thus, the periods may be individually adjusted.

The temperature sensor may be calibrated so as to comprise an accuracy of±0.25K or less, preferably ±0.20K or less and more preferably ±0.15K or less. Thus, the accuracy of the temperature sensor is sufficient for most applications.

The power source may be a battery, a rechargeable battery and/or a capacitor. Thus, the power source may be selected from a large group of commercially available constructional members and the exact power source may be adapted to the respective application.

The temperature sensor may be configured to detect temperatures in a range from -20°C to 140°C and preferably -10°C to 120°. Thus, the device may be used to detect temperatures of fluids used in most analytical processes.

The communication interface may be configured to be plugged to the external read out device or to an adapter of the external read out device or to be wireless connected to the external read out device for enabling a read out of the temperature data. Thus, data retrieval is allowed in many different ways.

The communication interface may be configured to enable a real time read out of the temperature data. Thus, temperature control of the fluid is enabled in real time which facilitates the handling of the fluid. For this purpose, the communication interface may comprise a radio frequency (RF) chip.

The disclosed system comprises a read out device and a device as described before. The read out device is configured to be connected to the communication interface for enabling a read out of the temperature data.

The read out device enables temperature data retrieval. This data may be processed and used for a temperature control of the fluid.

The disclosed system further comprises an instrument for processing a plurality of fluids and a plurality of devices as described before. The devices are configured to be placed in at least some of the plurality of fluids. Thus, temperatures may be detected at several strategic important positions. For example, several devices may be used for testing the homogeneity of a multiwell-plate during cycling.

The term "instrument" as used herein refers to any apparatus or apparatus component operable to execute one or more processing steps / workflow steps on one or more biological samples and/or one or more reagents. The expression 'processing steps' thereby refers to physically executed processing steps such as centrifugation, aliquoting, sample analysis and the like. The term 'instrument' covers pre-analytical instruments, post-analytical instruments and also analytical instruments. Thus, the term "instrument" is used synonymous with the term "laboratory instrument".

The term 'analyzer' / 'analytical instrument' as used herein encompasses any apparatus or apparatus component configured to obtain a measurement value. An analyzer is operable to determine via various chemical, biological, physical, optical or other technical procedures a parameter value of the sample or a component thereof. An analyzer may be operable to measure said parameter of the sample or of at least one analyte and return the obtained measurement value. The list of possible analysis results returned by the analyzer comprises, without limitation, concentrations of the analyte in the sample, a digital (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types. An analytical instrument may comprise units assisting with the pipetting, dosing, and mixing of samples and/or reagents. The analyzer may comprise a reagent holding unit for holding reagents to perform the assays. Reagents may be arranged for example in the form of containers or cassettes containing individual reagents or group of reagents, placed in appropriate receptacles or positions within a storage compartment or conveyor. It may comprise a consumable feeding unit. The analyzer may comprise a process and detection system whose workflow is optimized for certain types of analysis. Examples of such analyzer are clinical chemistry analyzers, coagulation chemistry analyzers, immunochemistry analyzers, urine analyzers, nucleic acid analyzers, used to detect the result of chemical or biological reactions or to monitor the progress of chemical or biological reactions.

The system may further comprise one or more temperature regulating units and a controller communicating with the read out device configured to control, such as in order to adjust the temperature, the one or more temperature regulating units based on the temperature data.

The disclosed use of a device as described before for detecting and logging a temperature of a fluid, comprises immersing at least one device in at least one respective fluid, powering the microprocessor by means of the power source, detecting the temperature of the at least one fluid by means of the integrated temperature sensor, and reading out the temperature data by an external read out device.

The device may be removed from the sample fluid and the temperature data may be subsequently read out. For this purpose, the device may be plugged to the external read out device. Alternatively, the temperature data may be read out while the devise is placed in the fluid. In the latter case, the temperature data may be read out in real time. Thus, temperature control of the fluid is enabled in real time which facilitates the handling of the fluid. For this purpose, the communication interface may comprise an RF chip.

The at least one fluid may be processed by an instrument for processing a fluid. The temperature of the fluid may be detected while the at least one fluid is processed. Processing of the at least one fluid includes any one or more of cooling, heating, preparing, analyzing, reacting and/or cycling the fluid. Thus, the temperature control of the fluid is enabled throughout and continuously during processing of the fluid.

Further logged temperature data may be compared with target temperature values to perform a quality control of an instrument, e.g. by comparing measured temperature values with expected or theoretical temperature values, e.g. temperature profiles, according to specification, thereby determining an operation qualification and performance qualification of the instrument.

Further, one or more temperature regulating units may be controlled based on the temperature data read by the read out device in order to adjust the temperature for processing the at least one fluid. For example, with this approach temperature homogeneity across a plurality of fluids may be established or re-established, or this approach is used generally to assure optimal processing temperature for one or more fluids. The adjustment and/or verification can be real time or before or after sample processing. This can be done once, e.g. at instrument manufacturing, e.g. for calibration purpose, or at regular intervals by service engineer or by a user, or in real time.

The term "multiwell plate" as used herein refers to a flat plate with multiple "wells" used as small test tubes. Such a multiwell plate is also known as microtiter plate. The microplate has become a standard tool in analytical research and clinical diagnostic testing laboratories. A very common usage is in the enzyme-linked immunosorbent assay (ELISA), the basis of most modern medical diagnostic testing in humans and animals. A multiwell plate typically has 6, 24, 96, 384 or 1536 sample wells arranged in a 2:3 rectangular matrix. Some microplates have even been manufactured with 3456 or 9600 wells, and an "array tape" product has been developed that provides a continuous strip of microplates embossed on a flexible plastic tape. Each well of a microplate typically holds somewhere between tens of picolitres to several millilitres of liquid. They can also be used to store dry powder or as racks to support glass tube inserts. Wells can be either circular or square. For compound storage applications, square wells with close fitting silicone cap-mats are preferred. Microplates can be stored at low temperatures for long periods, may be heated to increase the rate of solvent evaporation from their wells and can even be heat-sealed with foil or clear film. Microplates with an embedded layer of filter material were also developed, and today, there are microplates for just about every application in life science research which involves filtration, separation, optical detection, storage, reaction mixing, cell culture and detection of antimicrobial activity.

Summarizing the findings of the present invention, the following embodiments are preferred:
Embodiment 1: A device for detecting and logging a temperature of a fluid while placed in the fluid, the device comprising
   a microprocessor having an integrated temperature sensor, wherein the temperature sensor is configured to detect the temperature of the fluid,
   a power source configured to power the microprocessor, and
   a communication interface configured to be connected to an external read out device for enabling a read out of the temperature data.
Embodiment 2: The device according to embodiment 1, wherein the microprocessor further comprises an integrated storage device configured to at least temporarily store temperature data detected by the temperature sensor.
Embodiment 3: The device according to embodiment 1 or 2, further comprising a waterproof housing, wherein the microprocessor, the power source, and the communication interface are arranged within the housing.
Embodiment 4: The device according to embodiment 3, wherein the housing is a three dimensional body, wherein each of the dimensions of the body is smaller than 5.0 mm, preferably smaller than 4.5 mm and more preferably smaller than 4.0 mm.
Embodiment 5: The device according to any one of embodiments 1 to 4, wherein temperature sensor is configured to detect the temperature of the fluid at predetermined periods.
Embodiment 6: The device according to embodiment 5, wherein the periods are variable from 60s to 0.5s and preferably 30s to 1.0s.
Embodiment 7: The device according to embodiment 5 or 6, wherein the periods are continuously variable or are at predetermined steps variable.
Embodiment 8: The device according to any one of embodiments 1 to 7, wherein the temperature sensor is calibrated so as to comprise an accuracy of±0.25K or less, preferably ±0.20K or less and more preferably ±0.15K or less.
Embodiment 9: The device according to any one of embodiments 1 to 8, wherein the power source is a battery, a rechargeable battery and/or a capacitor.
Embodiment 10: The device according to any one of embodiments 1 to 9, wherein the temperature sensor is configured to detect temperatures in a range from -20°C to 140°C and preferably -10°C to 120°.
Embodiment 11: The device according to any one of embodiments 1 to 10, wherein the communication interface is configured to be plugged to the external read out device or to an adapter of the external read out device or to be wireless connected to the external read out device for enabling a read out of the temperature data.
Embodiment 12: The device according to any one of embodiments 1 to 11, wherein the communication interface is configured to enable a real time read out of the temperature data.
Embodiment 13: The device according to embodiment 12, wherein the communication interface comprises an RF chip.
Embodiment 14: A system comprising a read out device and a device according to any one of embodiments 1 to 13, wherein the read out device is configured to be connected to the communication interface for enabling a read out of the temperature data.
Embodiment 15: A system comprising an instrument for processing a plurality of fluids and a plurality of devices according to any one of embodiments 1 to 13, wherein the devices are configured to be placed in at least some of the plurality of fluids.
Embodiment 16: The system according to embodiment 14 or 15 further comprising one or more temperature regulating units and a controller communicating with the read out device configured to control the one or more temperature regulating units based on the temperature data.
Embodiment 17: Use of a device according to any one of embodiments 1 to 13 for detecting and logging a temperature of a fluid, comprising
   - immersing at least one device in at least one respective fluid,
   - powering the microprocessor by means of the power source,
   - detecting the temperature of the at least one fluid by means of the integrated temperature sensor, and
   - reading out the temperature data by an external read out device.
Embodiment 18: Use according to embodiment 17, further comprising storing at least temporarily the temperature data in the storage device.
Embodiment 19: Use according to embodiment 17 or 18, further comprising removing the device from the sample fluid, and subsequently reading out the temperature data.
Embodiment 20: Use according to embodiment 19, further comprising plugging the device to the external device.
Embodiment 21: Use according to any one of embodiments 18 to 20, further comprising reading out the temperature data while the devise is placed in the fluid.
Embodiment 22: Use according to embodiment 21, further comprising reading out the data in real time.
Embodiment 23: Use according to any one of embodiments 17 to 22, further comprising processing the at least one fluid by an instrument for processing a fluid, and detecting the temperature of the fluid while the at least one fluid is processed, wherein processing of the at least one fluid includes any one or more of cooling, heating, mixing, preparing, analyzing, reacting and/or cycling the fluid.
Embodiment 24: Use according to any one of the embodiments 17 to 23, further comprising comparing the logged temperature with target temperature values to perform a quality control of an instrument.
Embodiment 25: Use according to any one of embodiments 17 to 24, further comprising controlling one or more temperature regulating units based on the temperature data read by the read out device in order to adjust the temperature for processing the at least one fluid.

### Short description of the Figures

Further optional features and embodiments of the invention will be disclosed in more detail in the subsequent description of preferred embodiments, preferably in conjunction with the dependent embodiments. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a schematic view of a device for detecting and logging a temperature of a fluid;
- Figure 2: shows a schematic view of a system,
- Figure 3: shows the device immersed in the fluid and
- Figure 4: shows a schematic view of a further exemplary embodiment of the system.

### Detailed description

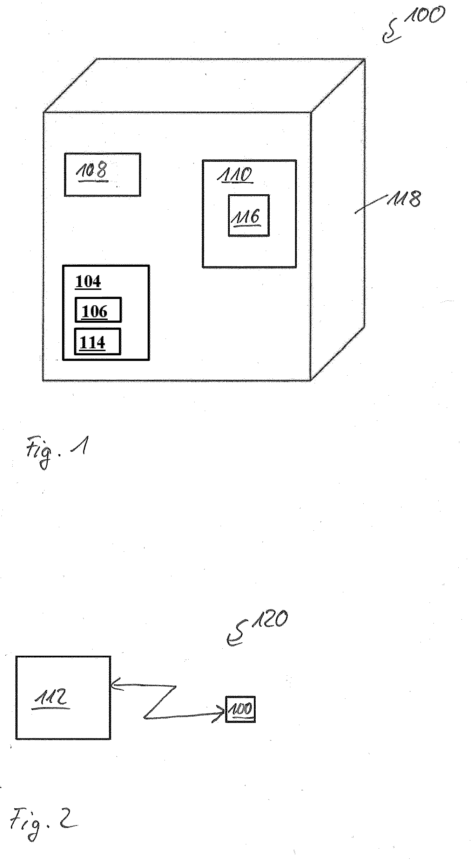

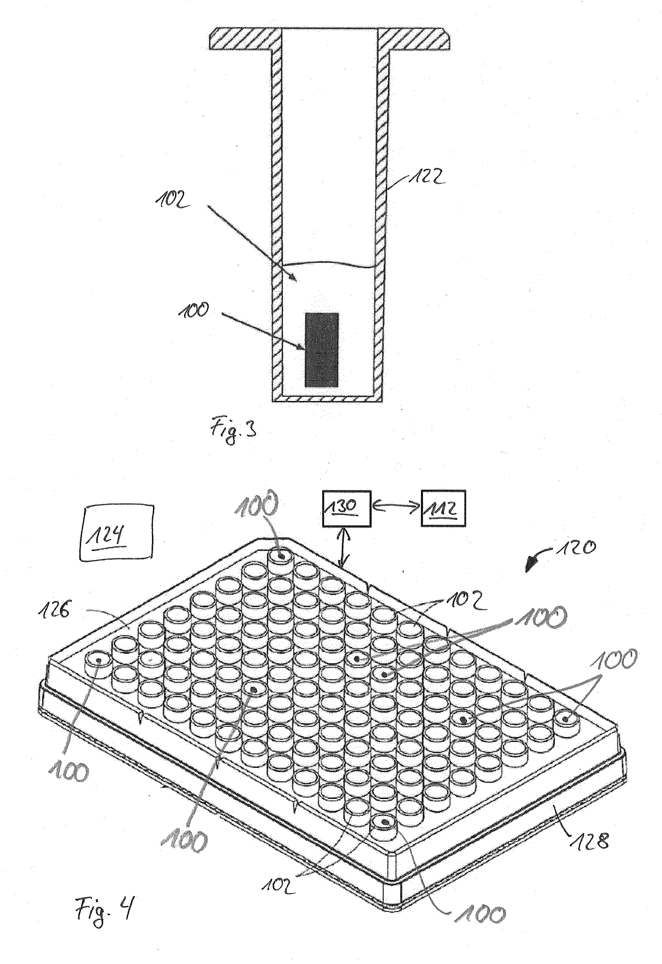

Figure 1 shows a schematic view of a device 100 for detecting and logging a temperature of a fluid 102. The device 100 is configured to detect a temperature of the fluid 102 while placed in the fluid 102 (Figure 3). The device 100 comprises a microprocessor 104. The microprocessor 104 comprises a temperature sensor 106 integrated therewith, i.e. an integrated temperature sensor. The temperature sensor 106 is configured to detect the temperature of the fluid 102. The temperature sensor 106 is configured to detect temperatures in a range from -20°C to 140°C and preferably -10°C to 120°. The temperature sensor 106 is calibrated so as to comprise an accuracy of±0.25K or less, preferably ±0.20K or less and more preferably ±0.15K or less. Particularly, the temperature sensor 106 is configured to detect the temperature of the fluid 102 at predetermined periods. The periods are variable from 60s to 0.5s and preferably 30s to 1.0s. The periods are continuously variable. Alternatively, the periods are variable at predetermined steps.

The device 100 further comprises a power source 108 configured to power the microprocessor 104. The power source 108 is a battery, a rechargeable battery and/or a capacitor. In the exemplary embodiment shown in Figure 1, the power source 108 is a capacitor. The capacitor has a capacity sufficient to power the microprocessor for at least 30 minutes and preferably at least 50 minutes.

The device 100 further comprises a communication interface 110 configured to be connected to an external read out device 112 (Figure 2) for enabling a read out of the temperature data. The temperature data are provided by the temperature sensor 106. The microprocessor 104 further comprises a storage device 114 integrated therewith and configured to at least temporarily store temperature data detected by the temperature sensor 106. For enabling a read out of the temperature data, the communication interface 110 is configured to be plugged to the external read out device 112. In addition or alternatively, the communication interface 110 is configured to be plugged to an adapter of the external read out device 112 or to be wireless connected to the external read out device 112. The communication interface 110 may be configured to enable a real time read out of the temperature data. For example, the communication interface 110 may comprise an RF chip 116. Such a RF chip 116 allows to continuously retrieve the temperature data by means of a corresponding antenna. Thus, the read out device 112 may retrieve the temperature data directly from the microprocessor 104. The power source 108 can be recharged for example via the communication interface 110, e.g. when plugged to the readout device 112, or via RF-Chip, or by induction.

The device 100 further comprises a waterproof housing 118. The microprocessor 104, the power source 108, the communication interface 110 and the storage device 114 are arranged within the housing 118. Thus, all of these components are protected from liquids such as water. This arrangement allows the device 100 to detect a temperature of the fluid 102 while placed in the fluid 102. The housing 118 is a three dimensional body. Each of the three dimensions of the body is smaller than 5.0 mm, preferably smaller than 4.5 mm and more preferably smaller than 4.0 mm. With other words, each of the length, width and height of the housing 118 are not larger than 5.0 mm, preferably 4.5 mm and more preferably 4.0 mm.

Figure 2 shows a schematic view of a system 120. The device 100 may be part of the system 120. The system 120 further comprises the read out device 112. The read out device 112 is configured to be connected to the communication interface 110 of the device 100 for enabling a read out of the temperature data. For this purpose, the communication interface 110 may be plugged to the read out device 112 or to an adapter of the read out device 112 or may be wireless connected to the read out device 112.

The device 100 may be used to detect a temperature of a fluid 102 while placed in the fluid 102 as will be explained in further detail below. For this purpose, the device 100 is immersed in the fluid 102.

Figure 3 shows the device 100 immersed in the fluid 102. For example, the fluid 102 is a liquid sample provided in a cuvette 122. Needless to say, the fluid 102 may be any kind of fluid and may be provided in another or different container such as a reagent vessel, sample vessel, sample tube and the like. While immersed in the fluid 102, the power source 108 powers the microprocessor 104 and the integrated temperature sensor 106 detects the temperature of the fluid 102.

The temperature data thus acquired are read out by the read out device 112. Particularly, the device 100 is removed from the fluid 102 and the temperature data are subsequently read out. For this purpose, the device 100 is plugged to the read out device 112 by means of the communication interface 110. In addition or alternatively, the temperature data may be read out while the device 100 is placed in the fluid 102. For example, the temperature data may be read out in real time by means of the RF chip 116 of the communication interface 110 and a corresponding antenna from the read out device 112.

Figure 4 shows a schematic view of a further exemplary embodiment of the system 120. Hereinafter, only the differences from the system 120 according to the previous embodiment are described and like constructional members are indicated by like reference numerals. As shown in Figure 4, the system 120 further comprises an instrument 124 for processing a plurality of fluids 102 and a plurality of devices 100 as described before. The fluids 102 may be provided in a multiwell plate 126. Needless to say, the fluids 102 may be provided in many different ways such as in a rack supporting a plurality of sample tubes. The devices 100 are configured to be placed in at least some of the plurality of fluids 102. The system 120 further comprises one or more temperature regulating units 128 and a controller 130 configured to communicate with the read out device 112. The controller 130 is configured to control the one or more temperature regulating units 128 based on the temperature data retrieved by the read out device 112. Thus, the system 120 is configured to adjust the temperature of the fluids 102.

With this arrangement it is possible to process the at least one fluid 102 by the instrument 124 and to detect the temperature of the fluid 102 while the at least one fluid 102 is processed. Processing of the at least one fluid 102 includes any one or more of cooling, heating, preparing, analyzing, reacting and/or cycling the fluid 102. Further it is possible to compare the logged temperature with target temperature values, such as saved temperature profiles, to perform a quality control of an instrument 124.

Further, the one or more temperature regulating units 128 are controlled based on the temperature data read by the read out device 112 in order to adjust the temperature for processing the at least one fluid 102. Thus, it is possible to establish or re-establish temperature homogeneity across a plurality of fluids 102, or generally to assure optimal processing temperature for one or more fluids 102. The adjustment can be real time or after sample processing. This can be done once, e.g. at instrument manufacturing, or at regular intervals by service engineer or by user, or real time.

### List of reference numbers

- 100: device
- 102: fluid
- 104: microprocessor
- 106: temperature sensor
- 108: power source
- 110: communication interface
- 112: read out device
- 114: storage device
- 116: RF chip
- 118: housing
- 120: system
- 122: cuvette
- 124: instrument
- 126: multiwell plate
- 128: temperature regulating unit
- 130: controller

## Claims

1. A device (100) for detecting and logging a temperature of a fluid (102) while placed in the fluid (102), the device (100) comprising
a microprocessor (104) having an integrated temperature sensor (106), wherein the temperature sensor (106) is configured to detect the temperature of the fluid (102),
a power source (108) configured to power the microprocessor (104), and
a communication interface (110) configured to be connected to an external read out device (112) for enabling a read out of temperature data.

2. The device (100) according to claim 1, wherein the microprocessor (104) further comprising an integrated storage device (114) configured to at least temporarily store temperature data detected by the temperature sensor (106).

3. The device (100) according to claim 1 or 2, further comprising a waterproof housing (118), wherein the microprocessor (104), the power source (108), and the communication interface (110) are arranged within the housing (118).

4. The device (100) according to claim 3, wherein the housing (118) is a three dimensional body, wherein each of the dimensions of the body is smaller than 5.0 mm, preferably smaller than 4.5 mm and more preferably smaller than 4.0 mm.

5. The device (100) according to any one of claims 1 to 4, wherein the temperature sensor (106) is calibrated so as to comprise an accuracy of±0.25K or less, preferably ±0.20K or less and more preferably ±0.15K or less.

6. The device (100) according to any one of claims 1 to 5, wherein the temperature sensor (106) is configured to detect temperatures in a range from -20°C to 140°C and preferably -10°C to 120°.

7. The device (100) according to any one of claims 1 to 6, wherein the communication interface (110) is configured to be plugged to the external read out device (112) or to an adapter of the external read out device (112) or to be wireless connected to the external read out device (112) for enabling a read out of the temperature data and/or for recharging the power source (108).

8. The device (100) according to any one of claims 1 to 7, wherein the communication interface (110) is configured to enable a real time read out of the temperature data.

9. A system (120) comprising a read out device (112) and a device (100) according to any one of claims 1 to 8, wherein the read out device (112) is configured to be connected to the communication interface (110) for enabling a read out of the temperature data.

10. The system (120) according to claim 9, further comprising an instrument (124) for processing a plurality of fluids (102) and a plurality of devices (100) according to any one of claims 1 to 8, wherein the devices (100) are configured to be placed in at least some of the plurality of fluids (102).

11. The system (120) according to claim 9 or 10 further comprising one or more temperature regulating units (128) and a controller (130) communicating with the read out device (112) configured to control the one or more temperature regulating units (128) based on the temperature data.

12. Use of a device (100) according to any one of claims 1 to 8 for detecting and logging a temperature of a fluid (102), comprising
- immersing at least one device (100) in at least one respective fluid (102),
- powering the microprocessor (104) by means of the power source (108),
- detecting the temperature of the at least one fluid (102) by means of the integrated temperature sensor (106),
- reading out the temperature data by an external read out device (112).

13. Use according to claim 12, further comprising processing the at least one fluid (102) by an instrument (124) for processing a fluid (102), and detecting and logging the temperature of the fluid (102) while the at least one fluid (102) is processed, wherein processing of the at least one fluid (102) includes any one or more of cooling, heating, preparing, analyzing, reacting and/or cycling the fluid (102).

14. Use according to claim 12 or 13 further comprising comparing the logged temperature with target temperature values to perform a quality control of an instrument (124).

15. Use according to claim 13 and 14 further comprising controlling one or more temperature regulating units (128) based on the temperature data read by the read out device (112) in order to adjust the temperature for processing the at least one fluid (102).
